# EUROPÄISCHE PATENTSCHRIFT

(11) **EP 1 131 503 B1**
(45) Veröffentlichungstag und Bekanntmachung des Hinweises auf die Patenterteilung: **14.04.2004**
(21) Anmeldenummer: 99920712.9
(22) Anmeldetag: 20.04.1999
(51) Int. Cl.: E04B 1/94, E04H 1/12, E04B 1/61

(54) **SICHERHEITSRAUM FÜR INFORMATIONSTECHNISCHE EINRICHTUNGEN**
SECURITY ROOM FOR INFORMATION TECHNOLOGY FACILITIES
LOCAL DE SECURITE POUR INSTALLATIONS INFORMATIQUES

(30) Priorität: 17.11.1998 DE 19852927
(43) Veröffentlichungstag der Anmeldung: 12.09.2001
(73) Patentinhaber: Otto Lampertz GmbH & Co. KG, 57584 Wallmenroth (DE)
(72) Erfinder: FRASE, Hans-Jürgen, D-57520 Niederdreisbach (DE); BÄHNER, Martin, D-57518 Betzdorf (DE)
(74) Vertreter: Fleck, Hermann-Josef, Dr.-Ing.
(86) Internationale Anmeldenummer: PCT/EP1999/002637
(87) Internationale Veröffentlichungsnummer: WO 2000/029685

(56) Entgegenhaltungen:
- EP-A- 0 458 560
- EP-A- 0 541 506
- DE-A- 3 718 911
- DE-U- 7 712 671
- GB-A- 504 255
- GB-A- 1 516 589
- US-A- 4 455 801

## Beschreibung

Die Erfindung bezieht sich auf einen Sicherheitsraum für informationstechnische Einrichtungen mit eine dichtende Tür aufweisenden brandschutzsicheren Seitenwänden, einem Boden und einer Decke, die aus nebeneinander angeordneten, miteinander verbundenen Einzelelementen zusammengesetzt sind.

Ein derartiger Sicherheitsraum für informationstechnische Einrichtungen ist in der DE-U 77 12 671 angegeben. Bei diesem bekannten Sicherheitsraum zur feuersicheren Aufbewahrung von Datenträgern ist eine Stahlkonstruktion aus handelsüblichen Stahlprofilen, z.B. Vierkantrohren, als Gerüst vorgesehen, mit denen Winkelprofile fest verbunden sind. An den Stahlprofilen sind auf deren nach innen und außen gerichteten Seiten des Weiteren Streifen aufgebracht, Platten sind über Streifen mit verschiedenen Verbindungsmitteln an der Stahlkonstruktion befestigt. Wärmebrücken werden dadurch vermieden, dass Schrauben, Muttern und Stahlklammern versetzt angeordnet sind (vgl. Seite 4, oben). Der Aufbau des Schutzraumes ist relativ aufwendig und erlaubt keine einfache Montage und somit auch keine einfache Variabilität bei unterschiedlichen Einsatzbedingungen.

In der EP-A 0 458 560 ist vorgeschlagen, einen Raum aus brandschutzsicheren Elementen aufzubauen, wobei die Brandschutzelemente eine Zwischenschicht aus Metall und ein auf dieser aufgebrachtes Leitungssystem zur Berieselung mit einer Kühlflüssigkeit aufweisen. Das Leitungssystem ist seinerseits in eine Kühlungsschicht eingebettet, die auf einer Seite der Zwischenschicht angeordnet ist, während auf der anderen Seite der Zwischenschicht eine Berieselungs-Kühlungsschicht (trickle cooling layer) aufgebracht ist. Für die Versorgung mit Kühlflüssigkeit ist eine Versorgungsleitung vorgesehen. Dieser Aufbau und die dafür erforderliche Kühlmittelzufuhr ergeben einen nicht unerheblichen Montageaufwand.

Ein in der GB-A 504 255 angegebener Raum ist modulartig zusammengesetzt, wobei aus einzelnen mit ihren Rändern zusammengesetzten Paneelen die Seitenwände, eine Decke und ein Boden aufgebaut ist. Die Paneele weisen jeweils Aluminiumrahmen mit E-förmigem Querschnitt auf. Als Schichtmaterial ist beispielsweise mit Bakelit imprägniertes Papier angegeben. Vorhandene Öffnungen sind mit Moskitonetz versehen. Von einer Brandschutzsicherheit ist nicht die Rede.

Der Erfindung liegt die Aufgabe zugrunde, einen Sicherheitsraum der eingangs genannten Art bereitzustellen, der aus möglichst einfachen Teilen leicht aufbaubar ist und entsprechend verschiedenen räumlichen Gegebenheiten leicht zusammengesetzt werden kann.

Diese Aufgabe wird mit den Merkmalen des Anspruchs 1 gelöst. Hiernach ist vorgesehen, dass die Einzelelemente modulartig zusammengesetzt sind, dass die Ecken der Seitenwände mit einstückigen Eckelementen aufgebaut sind, dass zwischen den Seitenwandelementen, den Eckelementen und den Deckenelementen brandschutzsichere Dichtungselemente angeordnet sind und dass die Seitenwandelemente, die Eckelemente und die Deckenelemente mittels die Dichtungselemente zusammendrückender Verbindungselemente fluchtend zusammengehalten sind. Der modulartige Aufbau des Brandschutzraumes aus den Seitenwänden, dem von diesen umgebenen Boden und der Decke ergibt eine einfache Installation bei einfach, übersichtlich aufgebauten Teilen, wobei sich die Module entsprechend den räumlichen Gegebenheiten zu kleineren oder größeren Baueinheiten in unterschiedlichen Längen- und Breitenverhältnissen zusammensetzen lassen. Dabei sind insbesondere auch die Verbindungsstellen der einzelnen Wandelementen brandschutzsicher ausgebildet. Zudem wird eine bausatzartige Lagerhaltung ermöglicht.

Die Schwierigkeit, Ecken sicher zu verbinden und abzudichten, wird dadurch umgangen, dass die Ecken der Seitenwände mit einstückigen Eckelementen aufgebaut sind.

Die Beschädigung der Wandelemente wird dadurch vermieden und eine einfache, sichere Verbindung wird dadurch gewährleistet, dass zwischen den Seitenwandelementen, den Eckelementen und den Deckenelementen brandschutzsichere Dichtungselemente angeordnet sind und dass die Seitenwandelemente, die Eckelemente und die Deckenelemente mittels die Dichtungselemente zusammendrückender Verbindungselemente fluchtend zusammengehalten sind.

Ist vorgesehen, dass die Breite der einstückig vom Boden bis zur Decke reichenden Seitenwandelemente zu der Breite der Deckenelemente oder umgekehrt in einem ganzzahligen Verhältnis (einschließlich 1) steht, wobei im zusammengesetzten Zustand zwei Längsränder eines oder mehrerer Seitenwandelemente mit zwei zugeordneten Längsrändern eines oder mehrerer Deckenelemente fluchten, so bildet die Breite des Seitenwandelements bzw. des Deckenelements, und zwar gegebenenfalls das Breitere von beiden, eine Grundeinheit, die die Breite der kleinsten möglichen Baueinheit bestimmt. Denkbar, aber ungünstiger wäre auch ein Aufbau, bei dem sich das Fluchten der Längsränder der Deckenelemente und der Seitenwandelemente erst nach mehreren Elementen wiederholt, wobei die Breite eines Elements nicht die Breite des kleinsten Raummoduls bestimmen würde, wohl aber auch ein modulartiger Aufbau ermöglicht würde, wobei die kleinste Raumeinheit einem Mehrfachen der Breite eines Deckenelements bzw. eines Seitenwandelements (und zwar des größeren von beiden) entsprechen würde.

Mit der Ausgestaltung derart, dass die Länge eines Deckenelements einem ganzzahligen Vielfachen (einschließlich 1) der Breite eines Seitenwandelements entspricht, wird erreicht, dass eine Raumeinheit in der Länge genau einem Deckenelement entspricht und bei einem rechteckigen bzw. quadratischen Raum dieser in Längsrichtung des Deckenelements von nur einem Deckenelement überspannt werden kann. Zum Vergrößern des Raums in Richtung der Längserstreckung der Deckenelemente können auch in Längsrichtung der Deckenelemente mehrere Deckenelemente aneinandergereiht werden, wobei stets gewährleistet ist, dass der vertikale Rand des letzten Seitenwandelements mit dem schmalen Rand des Deckenelements fluchtet.

Für den einfachen Aufbau sind weiterhin die Maßnahmen vorteilhaft, dass die Breite der Seitenwandelemente einem ganzzahligen Vielfachen der Breite der Bodenelemente oder umgekehrt entspricht.

Der brandschutzsichere Aufbau und die Isolierung mit der Möglichkeit, Installationselemente geschützt unterzubringen, wird weiterhin dadurch begünstigt, dass der Boden als Doppelboden aus einem unteren Bodenteil und einem beabstandeten oberen Bodenteil besteht und dass sowohl der untere Bodenteil als auch der obere Bodenteil von den Seitenwänden umgeben sind.

Für die einfache Installation und einen stabilen Aufbau sind weiterhin die Maßnahmen vorteilhaft, dass die Seitenwände auf ihrer Unterseite in einem Bodenprofil aufgenommen sind, das an einem bauseitigen Boden befestigt ist, dass die Seitenwandelemente und die Eckelemente an ihrer Oberseite im Querschnitt L-förmig auf der Innenseite nach unten abgesetzt sind und die Deckenelemente komplementär an ihren den Seitenwänden zugeordneten Rändern nach oben L-förmig abgesetzt sind und dass die Kanten zwischen den Seitenwänden und der Decke außen mittels die Schnittstellen überdeckender winkelförmiger Verkleidungsprofile abgedeckt sind. Mit diesen Maßnahmen können die Wandelemente einfach und eindeutig bei guter Abdichtung zusammengesetzt werden.

Eine hohe Brandschutzsicherheit bei relativ leichtem und einfachem Aufbau der Wandelemente wird dadurch unterstützt, dass die Seitenwandelemente, die Eckelemente sowie die Deckenelemente geschichtet mit auf ihren beiden Außenseiten angeordneten Stahl-Außenbeschichtungen und dazwischen mit mindestens zwei hohen Temperaturen im Innern des Raumes entgegenwirkenden Schichten aufgebaut sind.

Eine funktionsfähige Ausrüstung des Sicherheitsraums bei geschützter elektrischer Versorgung wird dadurch bereit gestellt, dass in seinem Innern eine Beleuchtungsvorrichtung und ein Klimagerät vorgesehen sind und dass die Versorgungskabel mittels einer in einer Seitenwand eingebauten brandschutzsicheren Kabeldurchführung mit einem verspannbaren Stopfrahmen und darin aufgenommenen, an Kabel verschiedenen Durchmessers anpaßbaren elastischen Abdichtmodulen abgedichtet in das Innere eingeführt sind, und weiterhin dadurch, dass eine Brandlöschanlage mit in der Decke verteilten Zuführöffnungen für Löschmittel, eine Löschmittelentsorgung und ein Brandschutzschieber sowie eine Steuereinrichtung zum Aufnehmen von Sensorsignalen und Ansteuern von Aktuatoren vorgesehen sind.

Die Erfindung wird nachfolgend anhand von Ausführungsbeispielen unter Bezugnahme auf die Zeichnungen näher erläutert. Es zeigen:
Fig. 1 eine perspektivische Darstellung eines Sicherheitsraums mit teilweise aufgeschnittenen Wänden,
Fig. 2 einen Querschnitt eines Ausschnitts des in einen bauseitigen Raum eingebauten Sicherheitsraums,
Fig. 3a) bis 3d) verschiedene Wandelemente in perspektivischer Ansicht,
Fig. 4A und 4B einen Verbindungsbereich zwischen Wandelementen in Draufsicht und in Seitenansicht,
Fig. 5 eine Abstützeinrichtung in einem größeren Sicherheitsraum,
Fig. 6 einen Türeinbau im Querschnitt,
Fig. 7 ein Einbauelement in dem Sicherheitsraum und
Fig. 8 eine Kabeldurchführung zwischen dem Äußeren und dem Inneren des Sicherheitsraums.

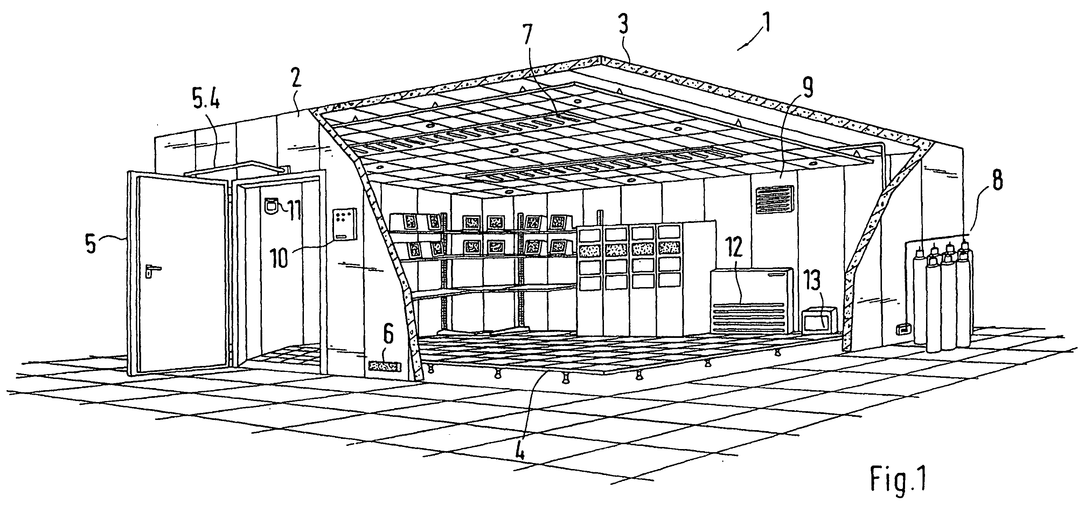

Fig. 1 zeigt in perspektivischer Darstellung als wesentliche Teile eines Brandschutzraumes 1 Seitenwände 2 mit einer Tür 5, einer Decke 3 sowie einen Doppelboden 4, wobei die Seitenwände 2, die Decke 3 und der Boden 4 aus einzelnen Wandelementen modulartig zusammengesetzt sind. In dem Raum sind verschiedene Komponenten der Informations- bzw. Steuerungstechnik untergebracht, sowie ein Klimagerät 12 und eine Beleuchtungsvorrichtung 7 vorgesehen. Für den Brandfall ist eine Brandlöschanlage 8 mit außen angeordneten, ein Brandschutzmittel enthaltenden Behältern und im Innern des Sicherheitsraums 1 angeordneten Leitungen und in der Decke angeordneten Auslassöffnungen sowie ferner mit einer Löschmittelentsorgung 9 vorgesehen. An einer Außenseite ist außerdem ein elektronisches Steuersystem 10 angeordnet, während im Innern ein Bewegungsmelder 11 angebracht ist. Im Innern kann außerdem eine unterbrechungsfreie Stromversorgung 13 vorhanden. In einer Seitenwand 2 ist eine Kabeleinführung 6 zur Stromversorgung der im Innern des Sicherheitsraums 1 angeordneten elektrischen Komponenten eingebaut.

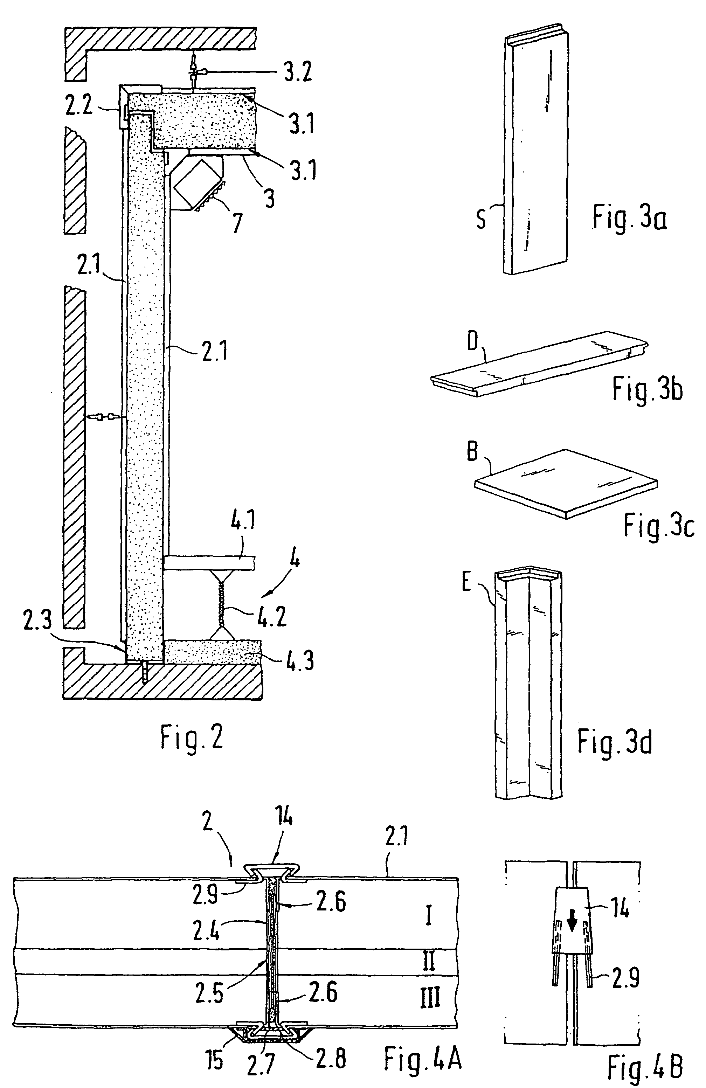

Die Fig. 3a) bis 3d) zeigen die verschiedenen Wandelemente in Form eines Seitenwandelements S, eines gleich breiten Deckenelements D, eines Bodenelements B und eines Eckelements E, dessen Seitenteile vorzugsweise der Breite eines Seitenwandelementes S entsprechen. Aus den Fig. 2, 4A und 4B ist der Aufbau dieser Wandelemente im Querschnitt und deren Verbindungsbereich ersichtlich. Demnach bestehen die Seitenwandelemente S und die Deckenelemente D und entsprechend auch die Eckelemente E aus einer Außenbeschichtung 2.1 bzw. 3.1 aus Stahlblech, indem ein kassettenartiger Aufbau gebildet ist und zwischen den beiden Außenbeschichtungen 2.1 bzw. 3.1 mehrere Brandschutzschichten I, II, III aus Isoliermaterial untergebracht sind, das eine Dämmwirkung im Brandfall hat, so dass die maximal zulässige Grenzwertbelastung der informationstechnischen Einrichtungen z.B. über 90 Minuten nicht überschritten wird.

Der Eckbereich zwischen den Seitenwandelementen S und den Deckenelementen D ist mittels eines winkligen Verkleidungsprofils 2.2 abgedeckt, wobei sich der vertikal nach unten gerichtete Schenkel des Verkleidungsprofils 2.2 über die Verbindungsstelle zwischen den Seitenwandelementen S und dem Deckenelement D erstreckt. Die aneinanderstoßenden Ränder des Seitenwandelements S und des Deckenelements D sind komplementär L-förmig ausgebildet, so dass sich die Seitenwandelemente S und die Deckenelemente D leicht und eindeutig bei guter Abdichtung zusammensetzen lassen. Zwischen den Längsseiten der Seitenwandelemente S und der Deckenelemente D sind Dichtmittel mit einer in der Mitte des Querschnitts angeordneten Expansionsdichtung 2.5, seitlich davon angeordneten Hochtemperaturdichtungen 2.6, einem außen angeordneten Dichtungsband 2.7 und einer zwischen dem Dichtungsband 2.7 und der Hochtemperaturdichtung 2.6 zusätzlich noch vorgesehenen Dichtungsmasse 2.8 angeordnet. Mit diesem Dichtungsaufbau sind auch die kritischen Verbindungsstellen brandschutzsicher ausgebildet. An die Dichtungsmittel schließen stirnseitig zu den Wandelementen Verbindungslaschen 2.4 an.

Zum einfachen und dabei sicheren Zusammenhalten der Wandelemente in den Übergangsbereichen sind an der Außenbeschichtung 2.1 Verbindungselemente 2.9 mit seitlich nach außen offenen Nuten gebildet, die nach oben konisch zusammenlaufen, wie aus den Fig. 4A und 4B ersichtlich ist. Auf die Verbindungselemente 2.9 werden entsprechend angepaßte, sich nach oben verjüngende, in die Nuten eingreifende Verschlußelemente 14 aufgedrückt, so dass die Dichtungsmittel zusammengedrückt werden und eine dichte Verbindung entsteht. Vorzugsweise im Innern sind die mit den Verbindungselementen 2.9 und den Verschlußelementen 14 versehenen Verbindungsstellen zwischen den einzelnen Wandelementen mittels eines im Querschnitt trapezförmigen Verkleidungsprofils 15 abgedeckt. An den Verkleidungsprofilen 15 können Befestigungskonsolen 18 für Einbauten in dem Rauminnern angebracht werden. Die Verbindungsbereiche zwischen den Wandelementen selbst weisen keinerlei Bohrungen oder Verschraubungen auf, die zu einer Gefährdung der Brandschutzsicherheit führen könnten.

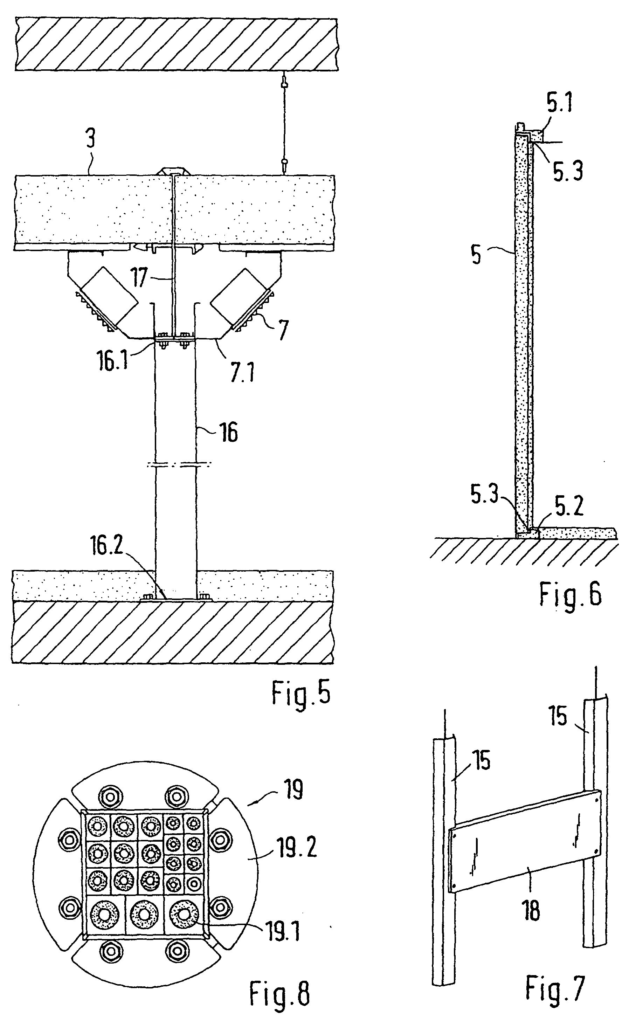

Wie aus Fig. 2 weiter ersichtlich ist, sind die Seitenwandelemente S mittels in dem bauseitigen Boden verankerter, im Querschnitt U-förmiger Bodenprofile 2.3 festgelegt, wodurch die Seitenwandelemente S sicher gehalten und einfach zu installieren sind. Die Deckenelemente können ihrerseits mittels Halterungen 3.2 an der raumseitigen Decke zusätzlich befestigt sein. Der als Doppelboden ausgebildete Boden 4 besteht aus einem unteren Bodenteil 4.3 und einem davon beabstandeten und daran mittels Verbindungsmitteln 4.2 festgelegten oberen Bodenteil 4.1 und ist insgesamt von den Seitenwänden 2 umgeben, so dass auch in diesem Bereich eine gute Abdichtung und ein guter Brandschutz gewährleistet sind. Die Beteuchtungsvorrichtung 7 kann anstelle in einer abgehängten zusätzlichen Decke gemäß Fig. 1 auch in dem Innenkantenbereich zwischen den Seitenwänden 2 und der Decke 3 angeordnet sein, wobei dortauch ein Kabelkanal 7.1 gebildet werden kann, wie z.B. gemäß Fig. 5.

Zum dichten und brandschutzsicheren Verschließen der Tür 5 ist in Türzargen 5.1, 5.2 rundum ein Dichtungspakte 5.3 eingebracht und die Tür entsprechend eingepaßt und mit brandschutzsicheren Materialien aufgebaut. Sie ist mit einem Türschließer 5.4 (siehe Fig. 1) versehen.

Fig. 5 zeigt die Abstützung aneinander stoßender Deckenelemente D mittels eines unter der Verbindungsstelle verlaufenden Trägerprofils 17 und einer darunter auf dem Boden abgestützten Stütze 16, die mittels einer Kopfplatte 16.1 an dem Trägerprofil 17 und mittels einer Fußplatte 16.2 an dem bauseitigen Boden verankert ist. Im Bereich des Trägerprofils 17 sind beidseitig Kabelkanäle 7.1 gebildet und schräg nach unten in den Raum abstrahlende Leuchten eingebaut.

Die in Fig. 1 gezeigte Kabeleinführung 6 kann gemäß der in Fig. 8 gezeigten Kabeldurchführung 19 aufgebaut sein. Diese weist einen äußeren Stopfrahmen 19.2 auf, in den für die jeweiligen Kabel Abdichtmodule 19.1 eingesetzt sind. Der Stopfrahmen wird nach der Installation durch Festziehen von Schrauben radial verengt, so dass die Abdichtmodule 19.1 zusammengedrückt werden. Die Abdichtmodule 19.1 enthalten zwiebelartig ineinandergesetzte Schalen, so dass sie an verschiedene Kabeldurchmesser angepaßt werden können.

Mit den beschriebenen Maßnahmen können auf einfache Weise Sicherheitsräume in unterschiedlicher Größe modulartig zusammengesetzt werden. Die Aufbauteile bieten einen Bausatz aus einfachen Elementen mit entsprechend einfacher Lagerhaltung.

## Patentansprüche

1. Sicherheitsraum für informationstechnische Einrichtungen, mit eine dichtende Tür (5) aufweisenden brandschutzsicheren Seitenwänden (2), einem von diesen umgebenen Boden (4) und einer Decke (3), die aus nebeneinander angeordneten, miteinander verbundenen Einzelelementen (S, B, D, E) zusammengesetzt sind,
**dadurch gekennzeichnet,**
**dass** die Einzelelemente (S, B, D, E) modulartig zusammengesetzt sind,
**dass** die Ecken der Seitenwände (2) mit einstückigen Eckelementen (E) aufgebaut sind,
**dass** zwischen den Seitenwandelementen (S), den Eckelementen (E) und den Deckenelementen (D) brandschutzsichere Dichtungselemente (2.5, 2.6, 2.7, 2.8) angeordnet sind und
**dass** die Seitenwandelemente (S), die Eckelemente (E) und die Deckenelemente (D) mittels die Dichtungselemente (2.5, 2.6, 2.7, 2.8) zusammendrückender Verbindungselemente (2.9, 14) fluchtend zusammengehalten sind.

2. Sicherheitsraum nach Anspruch 1,
**dadurch gekennzeichnet,**
**dass** die Breite der einstückig vom Boden (4) bis zur Decke (3) reichenden Seitenwandelemente (S) zu der Breite der Deckenelemente (D) oder umgekehrt in einem ganzzahligen Verhältnis steht, wobei im zusammengesetzten Zustand zwei Längsränder eines oder mehrerer Seitenwandelemente (S) mit zwei zugeordneten Längsrändern eines oder mehrerer Deckenelemente (D) fluchten.

3. Sicherheitsraum nach Anspruch 1 oder 2,
**dadurch gekennzeichnet,**
**dass** die Länge eines Deckenelements (D) einem ganzzahligen Vielfachen der Breite eines Seitenwandelements (S) entspricht.

4. Sicherheitsraum nach einem der vorhergehenden Ansprüche,
**dadurch gekennzeichnet,**
**dass** die Breite der Seitenwandelemente (S) einem ganzzahligen Vielfachen der Breite der Bodenelemente (B) oder umgekehrt entspricht.

5. Sicherheitsraum nach einem der vorhergehenden Ansprüche,
**dadurch gekennzeichnet,**
**dass** der Boden (4) als Doppelboden aus einem unteren Bodenteil (4.3) und einem beabstandeten oberen Bodenteil (4.1) besteht und
**dass** sowohl der untere Bodenteil (4.3) als auch der obere Bodenteil (4.1) von den Seitenwänden (2) umgeben sind.

6. Sicherheitsraum nach einem der vorhergehenden Ansprüche,
**dadurch gekennzeichnet,**
**dass** die Seitenwände (2) auf ihrer Unterseite in einem Bodenprofil (2.3) aufgenommen sind, das an einem bauseitigen Boden befestigt ist,
**dass** die Seitenwandelemente (S) und die Eckelemente (E) an ihrer Oberseite im Querschnitt L-förmig auf der Innenseite nach unten abgesetzt sind und die Deckenelemente (D) komplementär an ihren den Seitenwänden (2) zugeordneten Rändern nach oben L-förmig abgesetzt sind und
**dass** die Kanten zwischen den Seitenwänden (2) und der Decke (3) außen mittels die Schnittstellen überdeckender winkelförmiger Verkleidungsprofile (2.2) abgedeckt sind.

7. Sicherheitsraum nach einem der vorhergehenden Ansprüche,
**dadurch gekennzeichnet,**
**dass** die Seitenwandelemente (S), die Eckelemente (E) sowie die Deckenelemente (D) geschichtet mit auf ihren beiden Außenseiten angeordneten Stahl-Außenbeschichtungen (2.1, 3.1) und dazwischen mit mindestens zwei sich bei Temperaturen oberhalb von einigen 100° C umwandelnden, wärmeenergieverbrauchenden Schichten (I, II, III) aufgebaut sind.

8. Sicherheitsraum nach einem der vorhergehenden Ansprüche,
**dadurch gekennzeichnet,**
**dass** in seinem Innern eine Beleuchtungsvorrichtung (7) und ein Klimagerät (12) vorgesehen sind und
**dass** die Versorgungskabel mittels einer in einer Seitenwand (2) eingebauten brandschutzsicheren Kabeldurchführung (19) mit einem verspannbaren Stopfrahmen (19.2) und darin aufgenommenen, an Kabel verschiedenen Durchmessers anpassbaren elastischen Abdichtmodulen (19.1) abgedichtet in das Innere eingeführt sind.

9. Sicherheitsraum nach einem der vorhergehenden Ansprüche,
**dadurch gekennzeichnet,**
**dass** eine Brandlöschanlage (8) mit in der Decke (3) verteilten Zuführöffnungen für Löschmittel, eine Löschmittelentsorgung (9) und ein Brandschutzschieber sowie eine Steuereinrichtung zum Aufnehmen von Sensorsignalen und Ansteuern von Aktuatoren vorgesehen sind.

## Claims

1. Security room for information technology facilities, having fire-proof lateral walls (2) including a sealing door (5), a floor (4) surrounded by said walls and a ceiling (3), which are assembled from individual elements (S, B, D, E) which are interconnected and are disposed adjacent each other, **characterised in that** the individual elements (S, B, D, E) are assembled in a modular manner, **in that** the corners of the lateral walls (2) are constructed with one-piece corner elements (E), **in that** fire-proof sealing elements (2.5, 2.6, 2.7, 2.8) are disposed between the lateral wall elements (S), the corner elements (E) and the ceiling elements (D), and **in that** the lateral wall elements (S), the corner elements (E) and the ceiling elements (D) are held together so as to be in alignment by means of connecting elements (2.9,14) which compress the sealing elements (2.5, 2.6, 2.7, 2.8).

2. Security room according to claim 1, **characterised in that** the ratio between the width of the lateral wall elements (S), which extend in one piece from the floor (4) as far as the ceiling (3), and the width of the ceiling elements (D) or vice versa is a whole number, in the assembled state two longitudinal edges of one or of a plurality of lateral wall elements (S) being in alignment with two associated longitudinal edges of one or of a plurality of ceiling elements (D).

3. Security room according to claim 1 or 2, **characterised in that** the length of a ceiling element (D) corresponds to a whole-number multiple of the width of a lateral wall element (S).

4. Security room according to one of the preceding claims, **characterised in that** the width of the lateral wall elements (S) corresponds to a whole-number multiple of the width of the floor elements (B) or vice versa.

5. Security room according to one of the preceding claims, **characterised in that** the floor (4) is a double floor made of a lower floor portion (4.3) and, at a spacing therefrom, an upper floor portion (4.1), and **in that** both the lower floor portion (4.3) and the upper floor portion (4.1) are surrounded by the lateral walls (2).

6. Security room according to one of the preceding claims, **characterised in that** the lateral walls (2) are accommodated on their bottom surface in a floor section (2.3), which is secured to a base on the building side, **in that** the lateral wall elements (S) and the corner elements (E) are offset downwardly on their upper surface on the inside so as to be L-shaped in cross-section and the ceiling elements (D) are offset upwardly so as to be L-shaped in a complementary manner on their edges associated with the lateral walls (2), and **in that** the edges between the lateral walls (2) and the ceiling (3) are covered externally by means of angled cladding sections which overlap the interfaces (2.2).

7. Security room according to one of the preceding claims, **characterised in that** the lateral wall elements (S), the corner elements (E) and the ceiling elements (D) are constructed coated with steel outer coatings (2.1, 3.1) disposed on their two outside surfaces, and therebetween with at least two layers (I, II, III), which convert at temperatures above some 100° and consume thermal energy.

8. Security room according to one of the preceding claims, **characterised in that** a lighting device (7) and an air-conditioning device (12) are provided in the interior of the room, and **in that** the supply cable is introduced into the interior in a sealed manner by means of a fire-proof cable lead-in (19), which is incorporated in a lateral wall (2), said lead-in having a machinable packing framework (19.2) and resilient sealing modules (19.1), which are accommodated therein and are adaptable to cables with various diameters.

9. Security room according to one of the preceding claims, **characterised in that** there are provided a fire extinguishing system (8) with supply openings for extinguishing agent distributed in the ceiling (3), an extinguishing agent waste disposal means (9) and a fire protection slide as well as a control device for picking-up sensor signals and actuating actuators.

## Revendications

1. Local de sécurité pour équipements informatiques avec des parois latérales (2) coupe-feu ou ignifuges présentant une porte (5) fermant hermétiquement, un plancher (4) entouré par celles-ci et un plafond (3), lesquels sont composés d'éléments individuels (S, B, D, E) disposés côte à côte et reliés ensemble,
**caractérisé par le fait**
**que** les éléments individuels (S, B, D, E) sont assemblés de façon modulaire,
**que** les angles des parois latérales (2) sont constitués d'éléments d'angle (E) d'une seule pièce,
**que** des éléments d'étanchéité (2.5, 2.6, 2.7, 2.8) coupe-feu ou ignifuges sont disposés entre les éléments de parois latérales (S), les éléments d'angle (E) et les éléments de plafond (D) et
**que** les éléments de parois latérales (S), les éléments d'angle (E) et les éléments de plafond (D) sont tenus ensemble de manière alignée au moyen d'éléments de liaison (2.9, 14) comprimant les éléments d'étanchéité (2.5, 2.6, 2.7, 2.8).

2. Local de sécurité selon la revendication 1,
**caractérisé par le fait**
**que** la largeur des éléments de parois latérales (S) s'étendant d'une seule pièce du plancher (4) au plafond (3) et la largeur des éléments de plafond (D) ou inversement sont dans un rapport entier, deux bords longitudinaux d'un ou plusieurs éléments de parois latérales (S) étant alignés avec deux bords longitudinaux correspondants d'un ou plusieurs éléments de plafond (D) à l'état assemblé.

3. Local de sécurité selon la revendication 1 ou 2,
**caractérisé par le fait**
**que** la longueur d'un élément de plafond (D) correspond à un multiple entier de la largeur d'un élément de paroi latérale (S).

4. Local de sécurité selon l'une des revendications précédentes,
**caractérisé par le fait**
**que** la largeur des éléments de parois latérales (S) correspond à un multiple entier de la largeur des éléments de plancher (B) ou inversement.

5. Local de sécurité selon l'une des revendications précédentes,
**caractérisé par le fait**
**que** le plancher (4) est un double plancher constitué d'un plancher inférieur (4.3) et d'un plancher supérieur (4.1) distant du premier et qu'aussi bien le plancher inférieur (4.3) que le plancher supérieur (4.1) sont entourés par les parois latérales (2).

6. Local de sécurité selon l'une des revendications précédentes,
**caractérisé par le fait**
**que** les parois latérales (2) sont logées sur leur face inférieure dans un profilé de plancher (2.3) qui est fixé sur un plancher côté chantier,
**que** les éléments de parois latérales (S) et les éléments d'angle (E) sont, dans leur partie supérieure, étagés vers le bas en forme de L, vu en coupe transversale, sur la face intérieure et les éléments de plafond (D) sont, de façon complémentaire, étagés vers le haut en forme de L sur leurs bords correspondant aux parois latérales (2) et
**que** les arêtes entre les parois latérales (2) et le plafond (3) sont recouvertes extérieurement au moyen de profilés d'habillage (2.2) angulaires recouvrant les zones de jonction.

7. Local de sécurité selon l'une des revendications précédentes,
**caractérisé par le fait**
**que** les éléments de parois latérales (S), les éléments d'angle (E) ainsi que les éléments de plafond (D) sont constitués, en couches, de revêtements extérieurs en acier (2.1, 3.1) disposés sur leurs deux faces extérieures et entre les deux d'au moins deux couches (I, II, III) absorbant l'énergie thermique, se transformant à des températures supérieures à quelques 100° C.

8. Local de sécurité selon l'une des revendications précédentes,
**caractérisé par le fait**
**qu'**il est prévu à l'intérieur de celui-ci un dispositif d'éclairage (7) et un appareil de climatisation (12) et
**que** les câbles d'alimentation sont introduits à l'intérieur de façon étanche au moyen d'une traversée de câble (19) coupe-feu ou ignifuge intégrée dans une paroi latérale (2) avec un cadre presse-étoupe (19.2) raidissable et, logés dans celui-ci, des modules d'étanchéité (19.1) élastiques adaptables à des câbles de différent diamètre.

9. Local de sécurité selon l'une des revendications précédentes,
**caractérisé par le fait**
**qu'**il est prévu une installation d'extinction d'incendie (8) avec des ouvertures d'amenée de matière extinctrice réparties dans le plafond (3), une évacuation de matière extinctrice (9) et un rideau coupe-feu ainsi qu'un dispositif de commande pour la réception de signaux de capteurs et la commande d'actionneurs.
